# EUROPEAN PATENT SPECIFICATION

(11) **EP 3 250 354 B1**
(45) Date of publication and mention of the grant of the patent: **06.03.2019**
(21) Application number: 16705815.5
(22) Date of filing: 19.01.2016
(51) Int. Cl.: B28D 1/32, B32B 9/00

(54) **PROCESS FOR THE PRODUCTION OF STONE MATERIAL MANUFACTURED ARTICLES AND ARTICLE MANUFACTURED BY SUCH PROCESS**
VERFAHREN ZUR PRODUKTION VON AUS STEINMATERIAL GEFERTIGTEN ARTIKELN UND MITTELS DES VERFAHREN HERGESTELLTER ARTIKEL
PROCÉDÉ POUR LA PRODUCTION D'ARTICLES MANUFACTURÉS EN MATÉRIAUX PIERREUX ET ARTICLE OBTENU PAR UN TEL PROCÉDÉ

(30) Priority: 29.01.2015 IT VR20150016
(43) Date of publication of application: 06.12.2017
(73) Proprietor: Aros S.r.l., 37010 Affi (VR) (IT)
(72) Inventor: FIORATTI, Stefano, 25015 Desenzano (BS) (IT)
(74) Representative: Laghi, Alberto
(86) International application number: PCT/IB2016/050239
(87) International publication number: WO 2016/120748

(56) References cited:
- EP-A1- 1 516 710
- EP-A2- 1 932 682
- WO-A1-2007/009860
- US-A- 5 375 385
- US-A1- 2004 121 089

## Description

The present invention relates to a process for the realization of manufactured articles in stone material.

In particular, the invention is advantageously employed to make natural stone and sheet-like manufactured articles, such as, for example, ceramic materials, natural marbles or composite marbles, i.e. marbles with zones in resin and quartzes, to which the following description will make explicit reference without thereby losing generality.

Stone laminate products in natural stone, typically slate, sandstone or ceramic (for example, Laminam®) are currently available and affordable on the market, which have also very small thicknesses (3 to 5 mm).

In particular, the slate, as a variety of metamorphic allochthonous rock of sedimentary origin, is a rock classified as soft or semi-hard rock, and it is defined by a variety of clay-calcareous shale easily dividable in thin, flat and light slabs or sheets, which are impermeable and resistant to the weather, arising from the low metamorphism of sedimentary rocks formed by deposition of a very fine silt (marl) due to erosion of ancient reliefs.

Such laminated products are generally made by gluing of tissues impregnated or impregnable with an adhesive material, adapted then to be "tear" eliminated allowing the delamination of the rock itself.

There are also other materials which lend themselves to the above delamination technology, materials such as sedimentary rocks easy to be disgregated superficially under the mechanical action of traction, or other ceramic materials obtained by pressing and subsequent firing to obtain ceramic rigid panels (Laminam®).

The technology of stone field has the limit that it can be used on material with low compactness or "prone" to be delaminated, in the case of ceramic laminae the material is obtained by the classic process of the production of tiles or slabs, along with the low thickness.

Another technology that is emerging on the market concerns the manufacture of ceramic sheets having low thickness (3-6mm), which are completely identical to the natural stones because made by laser printing technology capable of reproducing with an extreme high fidelity the appearance of the stone. Such sheets have a surface coating from molten glass that allows an aesthetic effect comparable to the natural stones.

Document US 2004/121089 A1 discloses a process for the production of stone material manufactured articles, comprising the following steps:
- preparing a solid or flat plate of stone material and pasting on a surface of said plate a support of a flexible material,
- cutting or sectioning of said plate so as to obtain a laminate panel of a determined minimum thickness,
- winding said laminate panel on a roller or equivalent curved surface; and
- recomposing the planarity of the said panel.

The object of the present invention is to provide a process for the realization of manufactured articles in stone materials having low thickness, which is alternative and advantageous compared to the above existing technologies currently on the market.

In particular, an object of the present invention relates to the realization of manufactured articles in sheet, tape or laminates, usually with excellent mechanical seal characteristics and high aesthetic aspects.

The structural and functional characteristics of the present invention and its advantages over the known art will be clearer and more evident from the claims below.

According to the invention, a process for the production of stone material manufactured articles is defined by the features of claim 1 and a manufactured article of stone material is defined by the features of claim 10.

Further preferred embodiments are defined by the features of dependent claims 2-9.

The process may also comprise :
- arranging a block or flat sheet of natural stone, or alternatively of ceramic materials, marbles or composite marbles, i.e. marbles with zones in resin and quartzes;
- - gluing a support sheet in a flexible material on a surface of such sheet. The mentioned support in flexible material includes preferably, but without limitation, one of the following: an insulating foam sheet or the like; *Velcro*® o *Velcro*®*OneWrap*®; a sandwich panel in an insulation component formed from a polyiso foam, expanded without the use of CFC or HCFC, coated on both sides with saturated glass veil (*Stiferite*®); a rigid polyurethane foam (*Corafoam*®); or like flexible materials. The following gluing materials are suggested: epoxy systems *Limpid* or resins *Glaxs,* both produced by Tenax S.p.A.
- carrying out the cutting or sectioning of said sheet to obtain a laminated panel with a determined minimum thickness, said cutting being made preferably, but without limitation, by disc/saw means or the like, or alternatively by diamond cutting wire means;
- carrying out the winding of the mentioned laminated panel on a roll or similar curved surface to obtain the crushing of the panel itself into chunks or parts having a substantially irregular shape;
- carrying out the impregnation or spreading on such crushed panel with the use of polymeric materials or thermosetting resins, such as epoxy resins, acrilic polyester resins or the like, also being variously stained;
- recomposing the planarity of the impregnated panel thus obtained.

In this way, a laminated panel is obtained having a limited thickness and a very low weight, provided with excellent characteristics of mechanical hardness and strength, with high aesthetic aspects and with chrome effects which make the use of the panels laminated thus obtained advantageous as laying and coating element, e.g. in profile coatings, columns, corrugated materials or in particular for furniture elements, washbasins, shower trays, bathtubs, tops of kitchens, and the like.

Such aesthetic and ornamental or value aspects may also be highlighted by adding to the above described process the further step of carrying out the brightening or painting of the aforementioned laminated panel.

Further advantages of the laminated panel thus obtained are the possibility of gluing on existing flat surfaces without removing the existing floor due to the low thickness, the possibility to couple to the panel itself for a thermal insulation that allows a high energy saving, the possibility of easy removal in case of using quick release systems such as velcro and the like, the use also for external coatings with low weight with the reduction of accidents during the laying or due to detachments, and the optimal yield per square meter of natural stone material.

## Claims

1. Process for the production of stone material manufactured articles comprising the following steps: preparing a solid or flat plate of stone material and pasting on a surface of said plate a support of a flexible material, cutting or sectioning of said plate so as to obtain a laminate panel of a determined minimum thickness, winding said laminate panel on a roller or equivalent curved surface so as to obtain the crushing of said panel in pieces or irregular parts; realizing the impregnation or coating of said crushed panel with polymeric materials or thermosetting resins; recomposing the planarity of said panel.

2. Process according to claim 1, **characterized in that** it comprises the further step of performing polishing or painting of said laminate panel.

3. Process according to claim 1 or 2, **characterized in that** the said flat plate is made of natural stone.

4. Process according to claim 1 or 2, **characterized in that** the said flat plate is made of ceramic material.

5. Process according to claim 1 or 2, **characterized in that** the said flat plate is made of marble or marble composite with resins and quartzes.

6. Process according to one or more of claims 1 to 5, **characterized in that** the said cutting is made using disk means.

7. Process according to one or more of claims 1 to 5, **characterized in that** the said cutting is made using diamond cutting wire means.

8. Process according to one or more of claims 1 to 7, **characterized in that** the said flexible support comprises an insulation foam sheet or a rigid polyurethane foam or equivalent material.

9. Process according to one or more of claims 1 to 8, **characterized in that** the said resins include epoxy resins, polyester, acrylic or the like, also variously colored.

10. Manufactured article of stone material obtained by the process according to one or more of the preceding claims 1 to 9.

## Patentansprüche

1. Verfahren zur Herstellung von aus einem Steinmaterial hergestellten Artikeln, umfassend folgenden Arbeitsschritte: Herstellen einer festen oder flachen Platte aus einem Steinmaterial und Aufbringen einer Paste auf eine Oberfläche der Platte aus einem Träger aus flexiblem Material, Schneiden oder Aufteilen der genannten Platte um ein laminiertes Panel mit einer gegebenen minimalen Dicke zu erhalten, und Wickeln des genannten laminierten Panels auf eine Walze oder eine äquivalente gekrümmte Oberfläche, um das Zerkleinern des genannten Panels in unregelmäßigen Stücken oder Teile zu erreichen, Imprägnieren oder Beschichten der genannten zerkleinerten Panels mit Polymermaterialien oder mit thermisch stabilisierten Harzen; Wiederherstellen der Ebenheit des genannten Panels.

2. Verfahren nach Anspruch 1, **dadurch gekennzeichnet, dass** es die weitere Phase des Polierens oder Lackierens des genannten laminierten Panels umfasst.

3. Verfahren nach Anspruch 1 oder 2, **dadurch gekennzeichnet, dass** die genannte ebene Platte aus Naturstein besteht.

4. Verfahren nach Anspruch 1 oder 2, **dadurch gekennzeichnet, dass** die genannten ebene Platte aus Keramikmaterial besteht.

5. Verfahren nach Anspruch 1 oder 2, **dadurch gekennzeichnet, dass** die genannte ebene Platte aus Marmor oder aus einer Marmorverbindung mit Harzen und Quarzen besteht.

6. Verfahren nach einem oder mehreren der Ansprüche 1 bis 5, **dadurch gekennzeichnet, dass** das genannte Schneiden unter Verwendung von Scheibenmittel ausgeführt wird.

7. Verfahren nach einem oder mehreren der Ansprüche 1 bis 5, **dadurch gekennzeichnet, dass** das genannte Schneiden mittels Diamantdrahtschneideinrichtungen ausgeführt wird.

8. Verfahren nach einem oder mehreren der Ansprüche 1 bis 7, **dadurch gekennzeichnet, dass** der genannte flexible Träger eine Folie aus Isolierschaummaterial oder einem harten Polyurethan-Schaummaterial oder ähnliches, umfasst.

9. Verfahren nach einem oder mehreren der Ansprüche 1 bis 8, **dadurch gekennzeichnet, dass** die genannten Harze Epoxidharze, Acryl, Polyester oder dergleichen oder auch verschiedenfarbige Elemente enthalten.

10. Aus Steinmaterial hergestellter Artikel, mittels des Verfahrens nach einem oder mehreren der vorstehenden Ansprüche 1 bis 9.

## Revendications

1. Procédé de fabrication d'articles fabriqués à partir d'un matériau en pierre comprenant les opérations suivantes: préparation d'une plaque solide ou plate d'un matériau en pierre et application d'une pâte sur une surface de ladite plaque d'un support en matériau souple, coupant ou sectionnant ladite plaque de manière à obtenir un panneau stratifié d'épaisseur minimale donnée, enroulant ledit panneau laminé sur un rouleau ou une surface courbe équivalente, de manière à obtenir l'écrasement dudit panneau en pièces ou portions irrégulières, réalisant l'imprégnation ou le revêtement dudit panneau écrasé avec des matériaux polymères ou des résines stabilisées thermiquement; restauration de la planéité de ce panneau.

2. Procédé selon la revendication 1, **caractérisé en ce qu'**il comprend la phase supplémentaire de polissage ou de peinture dudit panneau stratifié.

3. Procédé selon la revendication 1 ou 2, **caractérisé en ce que** ladite plaque plate est en pierre naturelle.

4. Procédé selon la revendication 1 ou 2 , **caractérisé en ce que** ladite plaque plate est en matériau céramique.

5. Procédé selon la revendication 1 ou 2, **caractérisé en ce que** ladite plaque plate est en marbre ou en un composé de marbre avec des résines et des quartz.

6. Procédé selon l'une ou plusieurs des revendications 1 à 5, **caractérisé en ce que** ladite découpe est effectuée en utilisant des moyens de disque.

7. Procédé selon une ou plusieurs des revendications 1 à 5, **caractérisé en ce que** ladite découpe est effectuée en utilisant un moyen de découpe à fil de diamant.

8. Procédé selon une ou plusieurs des revendications 1 à 7, **caractérisé en ce que** ledit support souple comprend une feuille de matériau en mousse isolante ou un matériau en mousse de polyuréthane rigide ou un matériau équivalent.

9. Procédé selon une ou plusieurs des revendications 1 à 8, **caractérisé en ce que** lesdites résines comprennent des résines époxy, un polyester acrylique ou similaire ou également de couleurs différentes.

10. Article en pierre, obtenu à partir du procédé selon l'une ou plusieurs des revendications 1 à 9.
